# EUROPEAN PATENT APPLICATION

(11) **EP 3 561 356 A1**
(43) Date of publication of application: **30.10.2019**
(21) Application number: 17886822.0
(22) Date of filing: 20.12.2017
(51) Int. Cl.: F16L 11/11, B32B 1/08, B32B 3/30, B32B 5/18, B32B 27/40

(54) **COMPOSITE TUBE**

(30) Priority: 26.12.2016 JP 2016251952
(71) Applicant: Bridgestone Corporation, Tokyo 104-8340 (JP)
(72) Inventor: MITSUHASHI, Kohei, Tokyo 104-8340 (JP)
(74) Representative: Oxley, Robin John George
(86) International application number: PCT/JP2017/045834
(87) International publication number: WO 2018/123780

(57) **Abstract**

A composite pipe including: a pipe body having a tubular shape and including a resin material; a covering layer including a resin material, the covering layer having a tubular shape and covering an outer circumferential surface of the pipe body, the covering layer having a bellow shape with annular ridge portions protruding outwardly in a radial direction, and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body; and a porous urethane layer being disposed between the pipe body and the covering layer, the porous urethane layer being held by the groove portions and the pipe body, and the porous urethane layer has a density of from 12 kg/m³ to 22 kg/m³ and a hysteresis loss of 42% or more.

## Description

### Technical Field

The present disclosure relates to a composite pipe having a multilayer structure.

### Background Art

Heretofore, various pipes, which cover piping in order to protect the piping, have been proposed. For example, Patent Literature 1 discloses a corrugated pipe for a wiring or piping material, through which the wiring or piping material is inserted, and at least the inner side of which is formed of a polyolefin synthetic resin or vinyl chloride resin mixed with a fluorocarbon resin.

[Patent Literature 1] Japanese Patent Application Laid-Open (JP-A) No. 2015-48909

### Summary of Invention

### Technical Problem

It is conceivable to, in a composite pipe including an interior pipe body and a bellows-shaped covering layer for covering the outer circumferential surface of the pipe body, dispose a porous urethane layer as a shock-absorbing layer between the pipe body and the covering layer from the viewpoint of further enhancing in shock-absorbing properties. In such a composite pipe, the covering layer is required to be displaced to expose an end of the interior pipe body when a coupling or the like is connected to an end of the interior pipe body.

However, this exposing operation is difficult when the porous urethane layer is in tight contact with the pipe body, and there may be cases in which the porous urethane layer does not follow the covering layer when the covering layer is displaced, and the porous urethane layer is left behind on an outer surface of the pipe body, resulting in a failure to sufficiently expose the pipe body.

Further, a composite pipe having a pipe body, a bellows-like covering layer covering the pipe body, and a porous urethane layer disposed between the pipe body and the covering layer is produced, for example, by applying, onto the outer circumferential surface of the porous urethane layer, a molten product of a resin composition for forming a covering layer in a state in which a sheet to be formed into the porous urethane layer is wound around the outer circumferential surface of the pipe body, and solidifying the molten product while forming it into a bellows shape. In this case, for forming the molten product of the resin composition for forming a covering layer into a bellows shape, a method is conceivable by which a pair of molds each having a semi-arc inner surface with bellows shape are made to approach the outer circumferential surface of the molten product from two directions to come into contact, and the molten product is solidified to form a bellows shape.

However, since a force acts on the molten product applied to the outer circumferential surface of the porous urethane layer such that the molten product is pushed back outward in the radial direction from the porous urethane layer, the molten product may not be fully accommodated inside the pair of molds, but rather pushed out into a contact portion of the pair of molds which the molten product should not normally reach. As a consequence, a burr may be generated outside a solidified covering layer. In a case in which there is a burr outside the covering layer, the movement of the covering layer for exposing an end of the pipe body is suppressed, and contraction of the covering layer itself becomes difficult. Although providing a step of removing any burr generated outside is also conceivable, this removal step complicates the production of a composite pipe.

Considering the above situation, an object of the present disclosure is to provide a composite pipe of an embodiment including a pipe body having a tubular shape, a covering layer which has a tubular shape and covers an outer circumferential surface of the pipe body, and a porous urethane layer disposed between the pipe body and the covering layer, wherein in the composite pipe, burrs at a radial direction outer side of the covering layer are suppressed, and occurrence of the porous urethane layer being left behind on a pipe body outer surface is suppressed, when an end of the covering layer is shortened to expose an end of the pipe body.

### Solution to Problem

The above problems are solved by the following disclosure.
<1> A composite pipe including a pipe body having a tubular shape and comprising a resin material; a covering layer comprising a resin material, the covering layer having a tubular shape and covering an outer circumferential surface of the pipe body, the covering layer having a bellow shape with annular ridge portions protruding outwardly in a radial direction, and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body; and a porous urethane layer being disposed between the pipe body and the covering layer, the porous urethane layer being held by the groove portions and the pipe body, and the porous urethane layer has a density of from 12 kg/m³ to 22 kg/m³ and a hysteresis loss of 42% or more.

### Advantageous Effects of Invention

According to an aspect of the present disclosure, there can be provided a composite pipe of an embodiment including a pipe body having a tubular shape, a covering layer which has a tubular shape and covers an outer circumferential surface of the pipe body, and a porous urethane layer disposed between the pipe body and the covering layer, wherein in the composite pipe, burrs at a radial direction outer side of the covering layer are suppressed, and occurrence of the porous urethane layer being left behind on a pipe body outer surface is suppressed, when an end of the covering layer is shortened to expose an end of the pipe body.

### BRIEF DESCRIPTION OF DRAWINGS

Figure 1 is a perspective view illustrating a composite pipe according to an embodiment of the present disclosure.
Figure 2 is a vertical cross-sectional view illustrating a composite pipe according to an embodiment of the present disclosure.
Figure 3 is a partially enlarged view of a vertical cross-section of a composite pipe according to an embodiment of the present disclosure.
Figure 4 is a view illustrating a step of manufacturing the composite pipe of the present disclosure.
Figure 5 is a vertical cross-sectional view illustrating a state in which an end of a pipe body of a composite pipe according to an embodiment of the present disclosure is exposed.
Figure 6 is a view illustrating a process in which a covering layer and a porous urethane layer in the vertical cross-section portion in Figure 3 are being shortened and deformed.
Figure 7 is a view illustrating a state in which a covering layer and a porous urethane layer in the vertical cross-section portion in Figure 3 are shortened and deformed.
Figure 8 is a perspective view illustrating a state in which an end of a pipe body of a composite pipe according to an embodiment of the present disclosure is exposed.
Figure 9 is a perspective view illustrating a composite pipe according to another embodiment of the present disclosure.

### DESCRIPTION OF EMBODIMENTS

Hereinafter, an embodiment as an example of the composite pipe according to the present disclosure is described in detail appropriately with reference to the drawings. It is meant that constituent components indicated by the same symbol in each drawing are the same constituent components. It is noted that descriptions and symbols overlapped in the embodiment described below may be omitted.

The "main component" herein refers to a component having the highest content on a mass basis in a mixture, unless particularly noted.

### < Composite Pipe >

The composite pipe according to the present disclosure includes a pipe body having a tubular shape, a covering layer which has a tubular shape and covers the outer circumferential surface of the pipe body, and a porous urethane layer disposed between the pipe body and the covering layer.

The pipe body is composed of a resin material, more precisely composed of a resin material containing a resin.

The covering layer is composed of a resin material, more precisely composed of a resin material containing a resin. It has a bellows shape with annular ridge portions protruding outwardly in a radial direction and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body.

The porous urethane layer is disposed so as to be held between the groove portions and the pipe body.

Further, the porous urethane layer has a density of from 12 kg/m³ to 22 kg/m³, and a hysteresis loss of 42% or more.

### • Density

In the composite pipe, an end of the covering layer is required to be shortened and displaced to expose an end of an interior pipe body when a coupling or the like is connected to an end of the pipe body. However, the pipe body cannot be sufficiently exposed in some cases because the porous urethane layer does not follow, and remains on the outer surface of the pipe body in the displacement of the covering layer.

Meanwhile, in the present disclosure, the porous urethane layer has a density of 22 kg/m³ or less, in the present disclosure.

By this means, the porous urethane layer has proper flexibility, and thus, the porous urethane layer favorably follows the movement of the covering layer when an end of the covering layer is shortened and displaced to expose an end of the pipe body, whereby the porous urethane layer is less likely to remain on the outer surface of the pipe body. As a result, the end of the pipe body can be easily exposed.

In this regard, in a case in which the porous urethane layer has a density of 12 kg/m³ or more, the porous urethane layer has proper strength and it is inhibited that the porous urethane layer is broken and damaged in processing in manufacturing or the like of the composite pipe.

The porous urethane layer preferably has a density within the range of from 14 kg/m³ to 20 kg/m³ or less, and more preferably from 16 kg/m³ to 20 kg/m³, in order to prevent the porous urethane layer from being left behind on the outer surface of the pipe body, and to prevent the occurrence of rupture or damage during the processing.

The density of the porous urethane layer can be measured according to the method prescribed in JIS-K7222 (2005). The measurement environment is here an environment of a temperature of 23°C and a relative humidity of 45%.

The method of controlling the density of the porous urethane layer within the above range is not particularly limited, and examples thereof include a method of adjusting the abundance ratio in the porous urethane layer (for example, the foaming rate in the case of the foam) and a method of adjusting the molecular structure of the urethane resin (namely, adjusting the molecular structure of a monomer serving as a raw material of the urethane resin, and/or the crosslinked structure thereof).

### • Hysteresis Loss

When the composite pipe is produced, a method is conceivable by which, for example, the outer circumferential surface of the pipe body is wound by a sheet serving as the porous urethane layer, and is further applied by a molten product of a resin composition for covering layer formation, a pair of molds each having a semi-arc inner surface having a bellows shape are made to approach the outer circumferential surface of the molten product from two directions to come into contact, and the molten product is solidified to form a bellows-shaped. However, the molten product for applying is subjected to application of a force so as to be pushed back from the porous urethane layer outward in the radial direction, whereby the molten product may be pushed out onto any contact portion between the pair of molds, thereby causing a burr to occur on the outside of the covering layer. Meanwhile, in the present disclosure, the hysteresis loss of the porous urethane layer is 42% or more. By this means, flattening of the porous urethane layer is adjusted to a proper range, it is inhibited that the molten product of a resin composition for covering layer formation is pushed back from the porous urethane layer outward in the radial direction and is pushed out onto the contact portion between the pair of molds, and occurrence of a burr on the outside of the covering layer in the radial direction is inhibited. Thus, obstruction of a movement for shortening and displacement of the covering layer to expose an end of the pipe body by any burr is inhibited, and the movement for shortening of the covering layer can be easily performed. A step of removing any burr generated on the outside of the covering layer in the radial direction can be omitted, and a complicated manufacturing process of the composite pipe can be avoided.

Although there is no particular restriction on the upper limit value of the hysteresis loss, it is preferably 80% or less.

The porous urethane layer preferably has a hysteresis loss within the range of from 42% to 80%, more preferably from 45% to 70%, and still more preferably from 47% to 60%.

The range of the hysteresis loss is preferably from 42% to 80%, more preferably from 45% to 70%, still more preferably from 47% to 60%.

The hysteresis loss of the porous urethane layer can be measured according to the method prescribed in JIS-K6400-2 (2012). The measurement environment is here an environment of a temperature of 23°C and a relative humidity of 45%. The hysteresis loss is measured three times in total and the second result thereof are adopted.

The method of controlling the hysteresis loss of the porous urethane layer within the above range is not particularly limited, and examples thereof include a method of adjusting the abundance ratio in the porous urethane layer (for example, the foaming rate in the case of the foam) and a method of adjusting the molecular structure of the urethane resin (namely, adjusting the molecular structure of a monomer serving as a raw material of the urethane resin, and/or the crosslinked structure thereof).

Next, a mode for carrying out the composite pipe of the present disclosure is described by way of example based on the drawings.

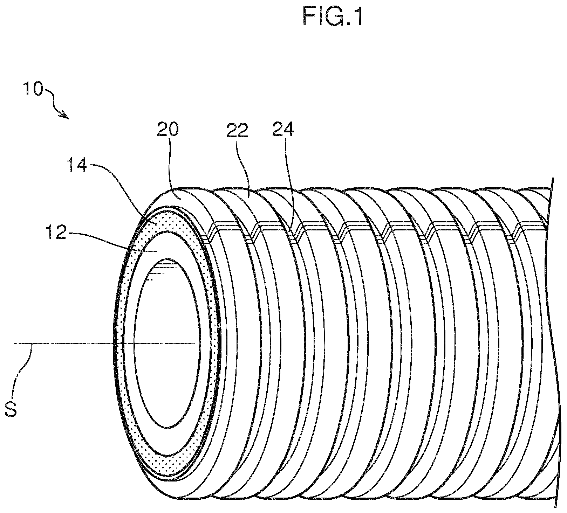

A composite pipe 10 according to the present embodiment, illustrated in Figure 1, includes a pipe body 12, a porous urethane layer 14, and a covering layer 20. Meanwhile, the symbol S represents the axis of the pipe body 12, and its axial direction.

### (Pipe Body)

The pipe body 12 has a tubular shape, and is a resin pipe composed of a resin material (that is, composed of a resin material containing a resin).

Examples of the resin in the resin material include polyolefins such as polybutene, polyethylene, crosslinked polyethylene, and polypropylene, and vinyl chloride, and such resins may be used singly, or in combination of two or more kinds thereof. In particular, polybutene is suitably used, the resin preferably includes polybutene as a main component, and, for example, the resin material included in the pipe body more preferably includes 85% by mass or more of polybutene.

The resin material included in the pipe body may be a material made of only the resin, or may contain other additive(s).

### (Covering Layer)

The covering layer 20 has a tubular shape, and covers the outer circumferential surfaces of the pipe body 12 and the porous urethane layer 14. The porous urethane layer 14 is disposed between the pipe body 12 and the covering layer 20.

The covering layer is composed of a resin material (that is, composed of a resin material containing a resin). Examples of the resin included in the resin material included in the covering layer include polyolefins such as polybutene, polyethylene, polypropylene, and crosslinked polyethylene, and vinyl chloride, and such resins may be used singly, or in combination of two or more kinds thereof. In particular, low-density polyethylene is suitably used, the resin preferably includes low-density polyethylene as a main component, and, for example, the resin material included in the covering layer more preferably includes 80% by mass or more, still more preferably 90% by mass or more of low-density polyethylene.

The melt flow rate (MFR) of the resin to be used is preferably 0.4 or more. In a case in which the MFR is 0.4 or more, the resin of the covering layer 20 can easily enter a porous structure of the porous urethane layer 14, thereby resulting in an enhancement in the degree of adhesion of the porous urethane layer 14 and groove portions 24 of the covering layer 20, described below.

The resin material included in the covering layer may be a material made of only the resin, or may contain other additive(s).

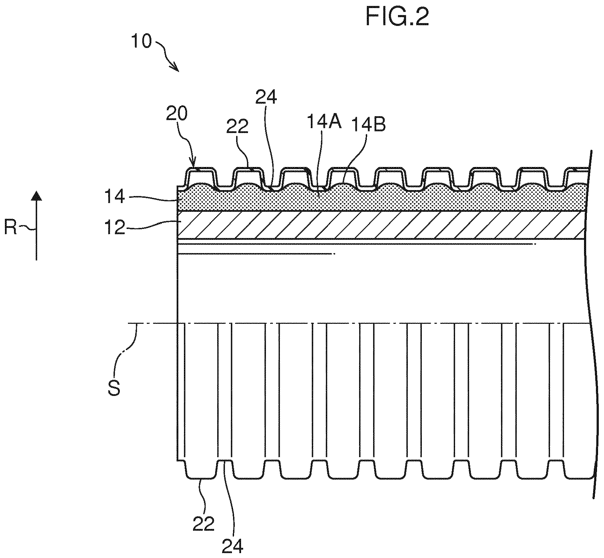

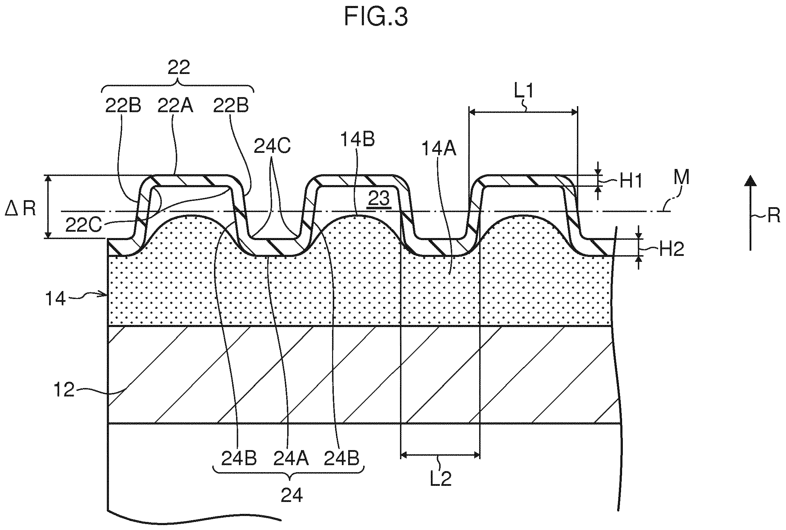

As illustrated in Figure 2, a covering layer 20 has a bellows shape, and annular ridge portions 22 protruding outwardly in a radial direction and annular groove portions 24 depressed inwardly in the radial direction are alternately continuously formed in an axial direction S of a pipe body 12. The ridge portions 22 is disposed more outward in a radial direction R, than the groove portions 24. As illustrated in Figure 3, in a case in which outermost portions of a bellows-shaped covering layer 20 in the radial direction are defined as outer walls 22A, and innermost portions thereof in the radial direction are defined as inner walls 24A, an intermediate portion M in the radial direction, between the outer walls 22A and the inner walls 24A is defined as a boundary, the areas outside the boundary in the radial direction are defined as ridge portions 22, and the areas inside the boundary in the radial direction are defined as a groove portions 24.

The ridge portion 22 includes an outer wall 22A extending in the axial direction S and side walls 22B extending from both ends of the outer wall 22A along with the radial direction R. Outer bent portions 22C are formed between the outer wall 22A and the side walls 22B. The groove portion 24 includes an inner wall 24A extending in the axial direction S and side walls 24B extending from both ends of the inner wall 24A along with the radial direction R. Inner bent portions 24C are formed between the inner wall 24A and the side walls 24B.

A protrusion space 23 recessed inside in the radial direction is formed inside the ridge portion 22 of the covering layer 20 in the radial direction. A projection portion 14B of a porous urethane layer 14 described below is preferably inserted into the protrusion space 23.

The length L1 of each of the ridge portions 22 in the axial direction S is preferably set to be longer than the length L2 of each of the groove portions 24 in the axial direction S, but is not particularly limited. The length L1 is preferably at least 1.2-times the length L2 in order to ensure ease of deformation of the outer walls 22A in shortening and deforming described below. The length L1 is preferably at most 5-times the length L2. In a case in which the length L1 is at most 5-times the length L2, flexibility of a composite pipe 10 can be kept. In a case in which the length L1 is too long, when the composite pipe 10 is provided, contact area of the composite pipe 10 with the ground increases, thereby resulting in difficulty in the providing of the composite pipe 10.

The covering layer 20 preferably has a thickness of 0.1 mm or greater at a thinnest portion and a thickness of 0.4 mm or less at a thickest portion in order to shorten the covering layer 20. A thickness HI of the outer wall 22A is less than a thickness H2 of the inner wall 24A. The thickness HI is preferably at most 0.9-times the thickness H2 in order to ensure ease of deformation of the outer wall 22A in shortening and deforming described below.

A difference in radius ΔR between the outer surfaces of the ridge portion 22 and the groove portion 24 is preferably 800% or less of the average thickness of the covering layer 20. In a case in which the difference in radius ΔR is large, even if the portion along the axial direction S of the ridge portion 22 is not deformed, radially outward swelling of the groove portion 24, or a distorted deformation without mutual approach of the adjacent ridge portions 22 is inhibited when the covering layer is shortened. In a case in which the difference in radius ΔR is 800% or less of the average thickness of the covering layer 20, making the length, in the axial direction S, of the ridge portion 22 longer than the length, in the axial direction, of the groove portion 24 is effective to inhibit such a situation of deformation. It is especially effective when the difference in radius ΔR is 600% or less of the average thickness of the covering layer 20.

Although there is no particular restriction on the diameter (the outermost diameter) of the covering layer 20, it may be for example in a range of from 12.85 mm to 34.25 mm. From the viewpoint of easy control of burrs radially outside the covering layer 20, the larger diameter is preferable.

### (Porous Urethane Layer)

The porous urethane layer 14 is a layer containing polyurethane as a main component. For example, it is preferred that polyurethane is contained in an amount of 80% by mass or more, and more preferably 90% by mass or more, in constituent components of the porous urethane layer. Further, the porous urethane layer may contain other additive(s). The abundance ratio of pores in the porous urethane layer (for example, in the case of the foam, the forming rate) is preferably from 25/25 mm to 45/25 mm. The abundance ratio can be measured by the method described in Appendix 1 of JIS-K6400-1 (2012).

The porous urethane layer has a density of from 12 kg/m³ to 22 kg/m³, and a hysteresis loss of 42% or more.

The porous urethane layer 14 is disposed between the pipe body 12 and the covering layer 20. The porous urethane layer 14 is held between an inner wall 24A of the groove portion 24 of the covering layer 20 and the pipe body 12. At a portion where the porous urethane layer 14 is held, it is preferred that the porous urethane layer 14 is compressed between the inner wall 24A and the pipe body 12, thereby forming a compressively held portion 14A.

The inner circumferential surface of the porous urethane layer 14 is preferably flat, is preferably fully in contact with the outer circumferential surface of the pipe body 12, and covers the outer circumferential surface of the pipe body 12. The "fully in contact with" here means not a need for completely close contact of the entire surface, but substantial contact of the entire surface. Accordingly, for example, in a case in which the porous urethane layer 14 is formed with being wound by a sheet-shaped porous resin sheet, a seam portion may be partially separated or a portion wrinkled between the pipe body 12 and the covering layer 20 may be partially separated.

The porous urethane layer 14 can have, for example, a sheet shape. The porous urethane layer 14 can be produced by, for example, winding a sheet-shaped porous resin sheet that is formed in a belt manner so as to have a width which has substantially the same length as the circumferential length of the outer circumferential surface of the pipe body 12, around the pipe body 12, and also feeding a resin composition for forming the covering layer 20, to the outer circumferential surface of thereof, and molding the resin composition.

The thickness of the porous urethane layer 14 is equal to or greater than the difference between the outer circumferential surface of the pipe body 12 and the inner surface in the radial direction of the inner wall 24A, in a natural state (a state at a temperature of 23°C and a relative humidity of 45%, in which there acts no force, for example, neither compression nor tension), and the thickness of the porous urethane layer 14 is preferably greater than the difference.

The porous urethane layer 14 is thinner in thickness on the compressively held portion 14A, than that in the natural state, due to compression. A projection portion 14B is formed between adjacent, compressively held portions 14A of the porous urethane layer 14. The projection portion 14B has a larger diameter than that of the compressively held portion 14A, and is projected into the protrusion space 23. The top of the projection portion 14B (the outermost portion in the radial direction) is preferably separated from the outer wall 22A in the protrusion space 23. In a case in which the porous urethane layer 14 is compressed by the inner walls 24A and the pipe body 12, the compressively held portions 14A and the projection portions 14B are alternately continuously formed in the axial direction S, and the outer circumferential surface of the porous urethane layer 14 has a wave shape.

The thickness of the porous urethane layer 14 in the natural state is preferably in a range of from 1.5 mm to 4.0 mm, more preferably from 2.0 mm to 3.0 mm from the viewpoint of ease of formation of the compressively held portions 14A compressed by the inner walls 24A and the pipe body 12. The thickness of the porous urethane layer 14 in the natural state is defined as the average value of values obtained by measurement at any 10 points of the porous urethane layer 14 taken out from the composite pipe 10.

A length, in the axial direction S, of the porous urethane layer 14 extracted from between the pipe body 12 and the covering layer 20, in the natural state is preferably from 90% to 100% of a length, in the axial direction S, of the covering layer 20. The reason for this is because in a case in which the porous urethane layer 14 is elongated and retained between the pipe body 12 and the covering layer 20, relative transferring between the porous urethane layer 14 and the covering layer 20 can easily occur, thereby making shortening of the porous urethane layer 14 and exposure of an end of the outer circumferential surface of the pipe body 12 can be impossible when the covering layer 20 is shorten and deformed. The length, in the axial direction S, of the porous urethane layer 14 in the natural state, is preferably from 90% to 100% of the length, in the axial direction, of the covering layer 20, in order to suppress such relative transferring between the porous urethane layer 14 and the covering layer 20.

Next, the action of the composite pipe 10 of the embodiment is described.

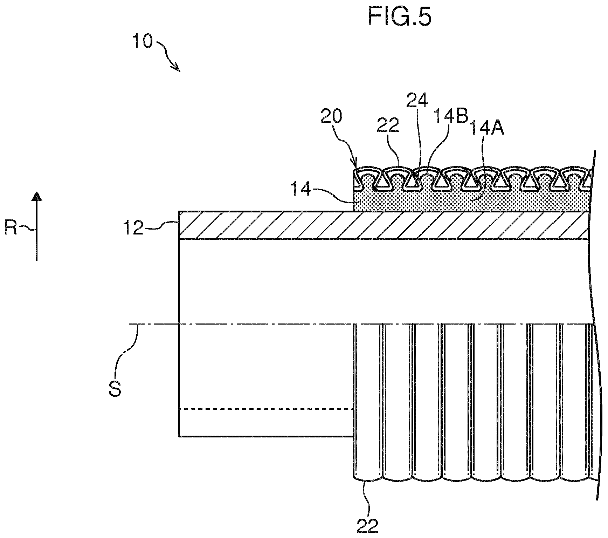

When the composite pipe 10 according to the embodiment and a coupling are connected, any force in a direction in which the covering layer 20 is shortened in the axial direction S to expose the pipe body 12 is acted on the covering layer 20 in the state illustrated in Figure 2. Thus, the covering layer 20 at one end is transferred in a direction in which the pipe body 12 is exposed, as illustrated in Figure 5.

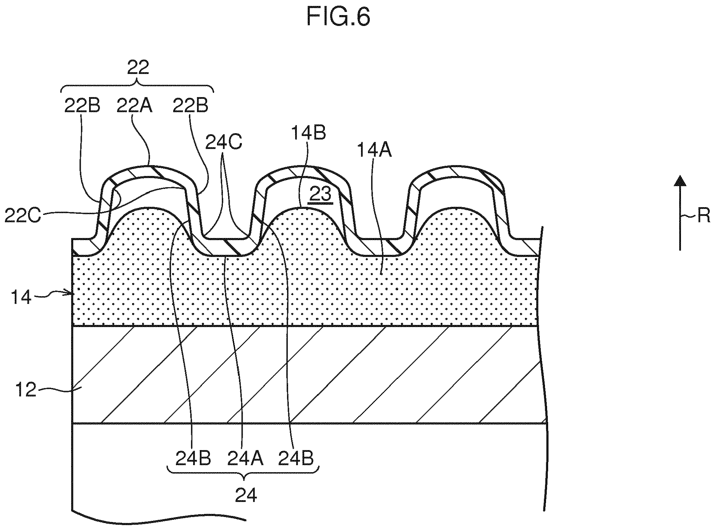

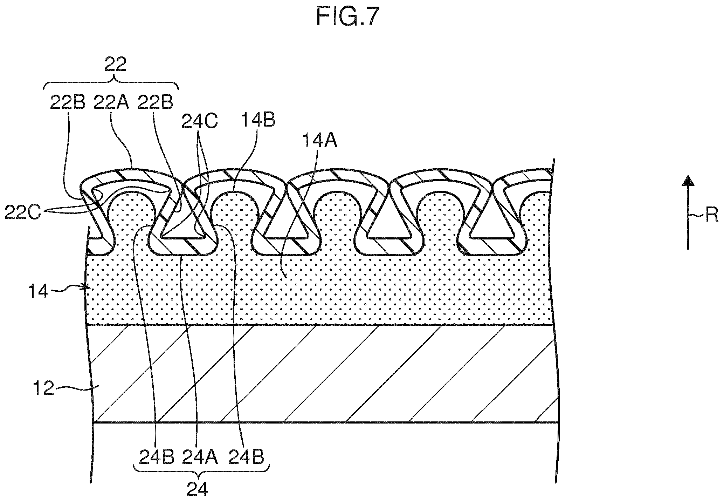

It is preferable in the outer wall 22A of the ridge portion 22 and the inner wall 24A of the groove portion 24 that the length L1 is longer than the length L2 in the axial direction S and the thickness HI is less than the thickness H2. Thus, the outer wall 22A is more easily deformed than the inner wall 24A, and is deformed so as to swell outward in the radial direction as illustrated in Figure 6. Subsequently, the outer bent portion 22C of the ridge portion 22 and the inner bent portion 24C of the groove portion 24 are deformed so that the ridge portion 22 approaches to adjacent one, as illustrated in Figure 7. Thus, the covering layer 20 at one end is easily transferred in a direction in which the pipe body 12 is exposed, as illustrated in Figure 5. Thus, deformation is made so that the outer walls 22A swells out in shortening of the covering layer 20, and thus swelling of the groove portions 24 outward in the radial direction and/or distortion deformation due to no approaching of the ridge portions 22 to adjacent one can be suppressed even in the presence of more or less variations in the bending angle and the thickness of the covering layer 20. Thus, being deteriorated of the appearance of the covering layer 20 shortened can be inhibited.

In the present embodiment, the porous urethane layer 14 has a density of 22 kg/m³ or less. By this means, the porous urethane layer 14 favorably follows a movement toward the direction in which the covering layer 20 is shortened, whereby the porous urethane layer 14 is less likely to remain on the outer surface of the pipe body 12.

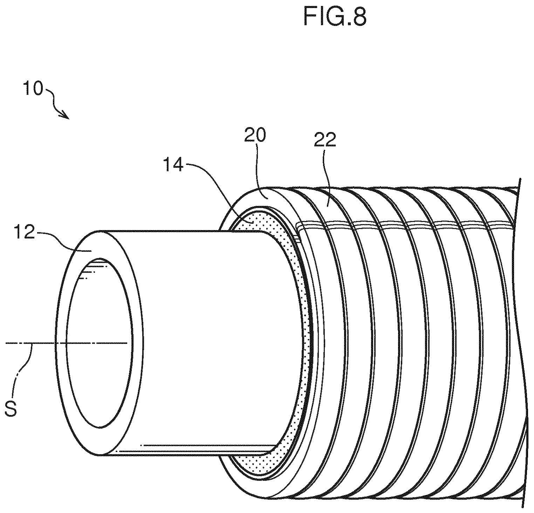

The porous urethane layer 14 is preferably compressed between the inner wall 24A and the pipe body 12, so that the compressively held portion 14A is in tight contact with the covering layer 20, and a projection 14B is engaged between the side walls 24B of the adjacent groove portions 24, therefore the porous urethane layer may be easily shortened together with the covering layer 20. Owing to such a configuration, an end of the pipe body 12 can be exposed as depicted in Figure 8.

While the thickness HI of the outer walls 22A is set to be less than the thickness H2 of the inner walls 24A in the embodiment, the thickness HI may be the same as the thickness H2.

While the outer walls 22A has a substantially straight shape in the axial direction S in the embodiment, the outer walls may have an arc shape swelling outward in the radial direction. The inner walls 24A may also have an arc shape swelling inward in the radial direction.

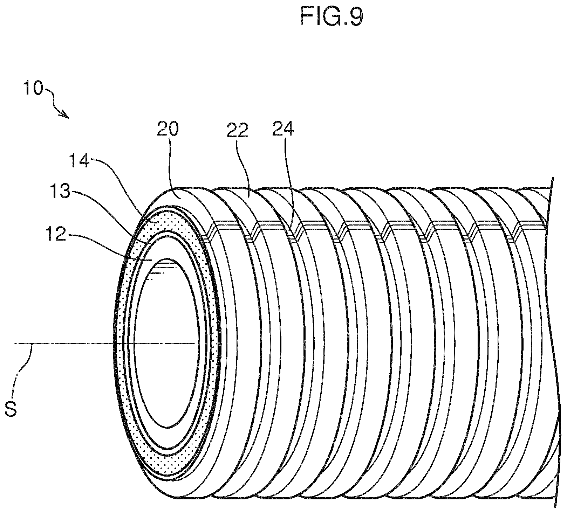

Further, in the present embodiment, as shown in Figure. 9, another layer 13 may be disposed between the porous urethane layer 14 and the pipe body 12. For example, a low friction sheet may be provided to improve the sliding property between the porous urethane layer 14 and the pipe body 12 to establish a configuration promoting deformation through improved followability of the porous urethane layer 14 and such other layer 13 to the covering layer 20, when an end of the pipe body 12 is to be exposed by shortening and deforming the covering layer 20.

Further, in the present embodiment, it is preferable that the porous urethane layer 14 is entirely in contact with the outer circumferential surface of the pipe body 12. By this means, after exposing an end of the pipe body 12 by moving the porous urethane layer 14 and the covering layer 20 relative to the pipe body 12, the porous urethane layer 14 and the covering layer 20 can be easily held at the shortened position by the friction force between the outer circumferential surface of the pipe body 12 and the inner circumferential surface of the porous layer 14.

Further, in the present embodiment, the porous urethane layer 14 is preferably compressed between the inner wall 24A and the pipe body 12. By this means, the compressively held portion 14A is brought into tight contact with the covering layer 20, and the projection 14B is engaged between the side walls 24B of the adjacent groove portions 24. This makes it easy for the porous urethane layer 14 to follow the movement of the covering layer 20, and makes it easy for the porous urethane layer 14 to be inhibited from being left behind on the outer circumferential surface of the pipe body 12, so that the porous urethane layer 14 can be more easily shortened together with the covering layer 20.

### (Manufacturing Method)

Next, a method of manufacturing the composite pipe 10 of the embodiment is described.

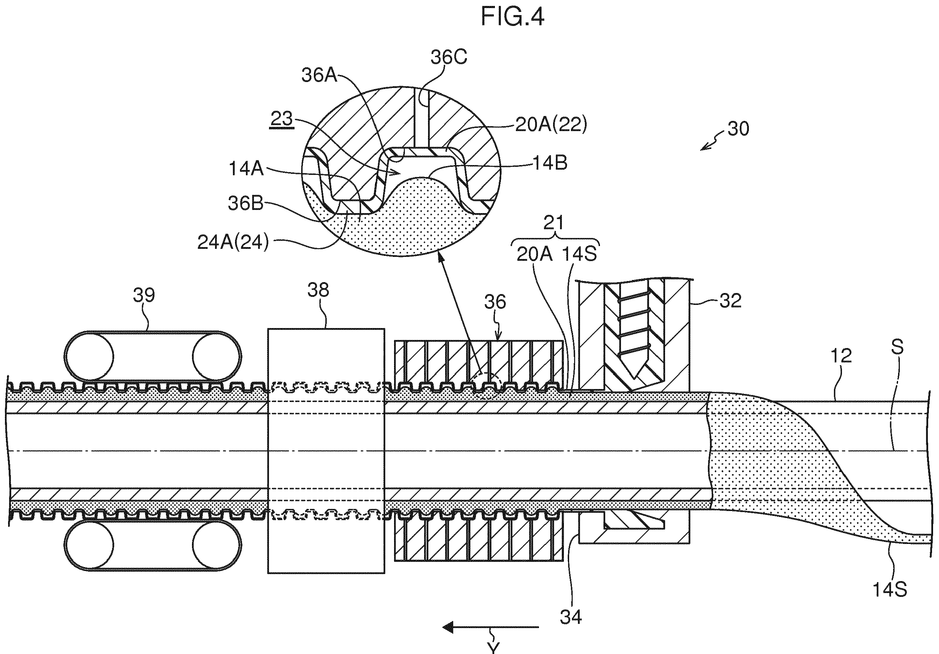

For example, a manufacturing apparatus 30 illustrated in Figure 4 can be used for manufacturing the composite pipe 10. The manufacturing apparatus 30 includes an extruder 32, a die 34, a corrugation mold 36, a cooling tank 38, and a receiving apparatus 39. The right section in Figure 4 is defined as being upstream in the manufacturing flow of the composite pipe 10 in the manufacturing apparatus 30, and the composite pipe is manufactured with the pipe body 12 being transferred from the right to the left. Hereinafter, the transferring direction is referred to as "manufacturing direction Y". The die 34, the corrugation mold 36, the cooling tank 38, and the receiving apparatus 39 are disposed in the listed order in the manufacturing direction Y, and the extruder 32 is disposed upstream relative to the die 34.

Although not illustrated, a pipe body 12 wound up in a coil shape, and a sheet-shaped member 14S, which is a porous urethane sheet wound up in a roll shape and is to form a porous urethane layer 14, are disposed upstream of the die 34. The pipe body 12 in a coil shape and the sheet-shaped member 14S in a roll shape are pulled by a receiving apparatus 39 in the manufacturing direction Y, and thus continuously extracted. The sheet-shaped member 14S is wound around the entire outer circumferential surface of the pipe body 12 extracted continuously, before the die 34. In this regard, the sheet-shaped member 14S is slackened before the die 34 in order not to allow a tensile force to act, and is inserted into the die 34.

The outer circumferential surface of the sheet-shaped member 14S wound onto the outer circumferential surface of the pipe body 12 is applied a resin material molten (a molten product of a resin composition for formation of the covering layer 20) cylindrically extruded from the die 34, and a resin layer 20A is formed. The resin here used is low-density polyethylene (LDPE) having an MFR of 0.4 or more, whereby the resin material easily enters pores (air bubbles) of the porous urethane sheet, thereby resulting in an enhancement in adhesion of the sheet-shaped member 14S and the resin layer 20A.

After a tubular extruded product 21 including the pipe body 12, the sheet-shaped member 14S, and the resin layer 20A is formed, a corrugation step (step of formation of a bellows shape) is performed in the corrugation mold 36 disposed downstream relative to the die 34. The corrugation mold 36 corresponds to, for example, a pair of molds, and all the molds have a semi-arc inner surface. Each annular cavity 36A is formed on a portion of the inner circumferential surface of such a mold, corresponding to the ridge portions 22 of the covering layer 20, and each annular inner projection 36B is formed on a portion thereof, corresponding to the groove portions 24, and has a bellows shape. Each vent 36C is formed in such a cavity 36A, the vent being formed with having one end in communication with such a cavity 36A and penetrating through each of such corrugation molds 36. Suction in such a cavity 36A is performed from the outside of each of such corrugation molds 36 via the vent 36C.

Such a pair of corrugation molds 36 approaches to the resin layer 20A from two directions downstream relative to the die 34 and the inner surfaces thereof are brought into contact therewith, and the corrugation molds are transferred together with the pipe body 12 in the manufacturing direction Y with the outer circumferential surface of the tubular extruded product 21 being covered under pushing of the resin layer 20A by the inner projection 36B. Suction from the outside of the corrugation molds 36 is here performed to thereby impart a negative pressure in the cavity 36A. Thus, the resin layer 20A is transferred outward in the radial direction, and a bellows-shaped covering layer 20 along with each of the corrugation molds 36 is formed.

In this regard, according to the present embodiment, the porous urethane layer 14 has a hysteresis loss of 42% or more. Therefore, pushing back the resin layer 20A axially outward by the porous urethane layer 14, and pushing out the resin layer 20A into the gap of the contact portion contacting the pair of corrugation molds 36 are suppressed, and generation of a burr radially outside the covering layer 20 is inhibited.

The sheet-shaped member 14S enters the cavity 36A in the protrusion space 23 corresponding to the ridge portions 22 of the covering layer 20, and the projection portions 14B is formed. A portion corresponding to the inner walls 24A of the groove portions 24 of the covering layer 20 is not only kept with adhering to the covering layer 20, but also compressed between the pipe body 12 and the inner walls 24A, and the compressively held portion 14A is formed.

After the corrugation step is performed on each of the corrugation molds 36, the covering layer 20 is cooled in a cooling tank 38. Thus, the composite pipe 10 is manufactured.

As described above, the present disclosure provides the following composite pipe.
<1> According to a first aspect of the present disclosure, there is provided a composite pipe including: a pipe body having a tubular shape and including a resin material; a covering layer including a resin material, the covering layer having a tubular shape and covering an outer circumferential surface of the pipe body, the covering layer having a bellows shape with annular ridge portions protruding outwardly in a radial direction, and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body; and a porous urethane layer disposed between the pipe body and the covering layer, the porous urethane layer being held between the groove portions and the pipe body, and the porous urethane layer having a density of from 12 kg/m³ to 22 kg/m³ and a hysteresis loss of 42% or more.
<2> According to a second aspect of the present disclosure, there is provided the composite pipe according to the first aspect, in which the porous urethane layer is compressed and held between the groove portions and the pipe body.
<3> According to a third aspect of the present disclosure, there is provided the composite pipe according to any one of the first or second aspects, in which a thickness of the porous urethane layer in a natural state is from 2 mm to 4 mm.
<4> According to a fourth aspect of the present disclosure, there is provided the composite pipe according to any one of the first to third aspects, in which the porous urethane layer has a sheet shape and contacts an entire outer circumferential surface of the pipe body.
<5> According to a fifth aspect of the present disclosure, there is provided the composite pipe according to any one of the first to fourth aspects, in which a length, in the axial direction, of the porous urethane layer in a natural state is from 90% to 100% of a length, in the axial direction, of the covering layer.
<6> According to a sixth aspect of the present disclosure, there is provided the composite pipe according to any one of the first to fifth aspects, in which a length, in the axial direction, of each of the ridge portions is greater than a length, in the axial direction, of each of the groove portions.

### EXAMPLES

Hereinafter, the present disclosure is further specifically described with reference to Examples, but the present disclosure is not intended to be limited to the following Examples.

### [Urethane Foam Sheet]

### (Urethane Foam Sheet (A1))

A polyisocyanate and a polyol as raw materials were mixed and reacted together with a catalyst, a foaming agent, and a foam stabilizer, to prepare a urethane foam sheet (A1) having a hysteresis loss and a density as shown in the following Table 1 and Table 2. The urethane foam sheet (A1) had a thickness (average thickness in a natural state) of 2.5 mm.

### (Preparation of Urethane Foam Sheet (B1))

A urethane foam sheet (B1) having a hysteresis loss and a density as shown in the following Table 1 and Table 2 was prepared by changing the composition of the urethane foam sheet (A1). The urethane foam sheet (B1) had a thickness (average thickness in a natural state) of 2.5 mm.

### (Preparation of Urethane Foam Sheet (B2))

A urethane foam sheet (B2) having a hysteresis loss and a density as shown in the following Table 1 and Table 2 was prepared by changing the composition of the urethane foam sheet (A1). The urethane foam sheet (B2) had a thickness (average thickness in a natural state) of 2.5 mm.

### (Preparation of Urethane Foam Sheet (B3))

A urethane foam sheet (B3) having a hysteresis loss and a density as shown in the following Table 1 and Table 2 was prepared by changing the composition of the urethane foam sheet (A1). The urethane foam sheet (B3) had a thickness (average thickness in a natural state) of 2.0 mm.

### (Preparation of Urethane Foam Sheet (B4))

A urethane foam sheet (B4) having a hysteresis loss and a density as shown in the following Table 1 and Table 2 was prepared by changing the composition of the urethane foam sheet (A1). The urethane foam sheet (B4) had a thickness (average thickness in a natural state) of 2.5 mm.

### (Preparation of Urethane Foam Sheet (B5))

A urethane foam sheet (B5) having a hysteresis loss and a density as shown in the following Table 1 and Table 2 was prepared by changing the composition of the urethane foam sheet (A1). The urethane foam sheet (B5) had a thickness (average thickness in a natural state) of 3.0 mm.

**[Table 1]**

| Urethane foam sheet | Hysteresis loss [%] |
|---|---|
| (B1) | 55.4 |
| (A1) | 47.5 |
| (B2) | - |
| (B3) | - |
| (B4) | 41.1 |
| (B5) | 31.9 |

**[Table 2]**

| Urethane foam sheet | Density [kg/m³] |
|---|---|
| (B1) | 27 |
| (B2) | 21 |
| (B3) | 21 |
| (B4) | 20 |
| (B5) | 20 |
| (A1) | 14 |

### [Example 1]

### (Preparation of Composite Pipe (A1))

A manufacturing apparatus having the structure shown in Figure 4 was prepared. A polybutene pipe wound in a form of a coil was loaded as the pipe body 12, and a polyurethane foam sheet (A1) produced by the method described before was loaded as the sheet-shaped member 14S. The receiving apparatus 39 was operated to continuously draw out the coiled polybutene pipe and the rolled-up polyurethane foam sheet (A1), and the polyurethane foam sheet (A1) was wound around the entire outer circumferential surface of the polybutene pipe. The polyurethane foam sheet (A1) was slackened before a die 34 and then inserted into the die 34.

Next, a molten resin material (low density polyethylene (LDPE)) was cylindrically extruded from the die 34 and applied to the outer circumferential surface of the polyurethane foam sheet (A1) to form a resin layer.

Then, a pair of corrugation molds 36 disposed on the downstream side of the die 34 were made to approach the resin layer from two directions to bring the inner surfaces into contact. The corrugation molds 36 are a pair of molds with the same inner surface shape, both of which have a semi-arc inner surface. On the inner circumferential surface, an annular cavity 36A is formed at a part corresponding to each ridge portion of the covering layer to be formed, and an annular inward projection 36B at a part corresponding to each groove portion is formed, such that a bellows shape is formed. In each of the cavities 36A, a vent 36C, one end of which is in communication with the cavity 36A through the corrugation mold 36, is formed. The resin layer 20A was moved together with the polybutene pipe in a manufacturing direction Y, while the resin layer 20A was pressed by the inward projections 36B, and the inside of cavity 36A was aspirated from the outside of the corrugation mold 36 to a negative pressure. Thus, the bellows covering layer was formed along the corrugation mold 36.

Then, by cooling in a cooling tank 38, a composite pipe (A1) was obtained.

In the obtained composite pipe (A1), the length L1 in the axial direction S of the ridge portion 22 of the covering layer was 2.1 mm, and the length L2 in the axial direction S of the groove portion 24 was 1.5 mm.

The thickness of the covering layer was 0.2 mm at the thinnest part, and 0.5 mm at the thickest part.

The difference in radius ΔR between the outer surface at the ridge portion 22 and the same at the groove portion 24 was 88.9%.

The diameter of the covering layer (the diameter of the outermost surface) was 23.5 mm.

The distance between the inner surface of the groove portion 24 of the covering layer and the outer surface of the polybutene pipe (the pipe body), namely the difference between the outer circumferential surface of the pipe body and the radially inner side surface of the inner wall 24A of the covering layer (clearance at the compressively held portion) was 1.5 mm.

The polyurethane foam sheet (A1) layer (porous urethane layer) was entirely in contact with the outer surface of the pipe body.

### [Comparative Examples 1 to 3 and Reference Examples 1 to 2]

A composite pipe (B1) according to Comparative Example 1 was obtained in the same manner as in Example 1, except that the urethane foam sheet (A1) was changed to the urethane foam sheet (B1)

A composite pipe (B2) according to Reference Example 1 was obtained in the same manner as in Example 1, except that the urethane foam sheet (A1) was changed to the urethane foam sheet (B2).

A composite pipe (B3) according to Reference Example 2 was obtained in the same manner as in Example 1, except that the urethane foam sheet (A1) was changed to the urethane foam sheet (B3).

A composite pipe (B4) according to Comparative Example 2 was obtained in the same manner as in Example 1, except that the urethane foam sheet (A1) was changed to the urethane foam sheet (B4).

A composite pipe (B5) according to Comparative Example 3 was obtained in the same manner as in Example 1, except that the urethane foam sheet (A1) was changed to the urethane foam sheet (B5).

In a case in which a urethane foam sheet having a thickness (average thickness in a natural state) of 2.5 mm was used, the clearance (the distance between the inner surface of the groove portions 24 of the covering layer and the outer surface of the polybutene pipe (pipe body)) was adjusted to 1.5 mm. Further, in a case in which a urethane foam sheet having a thickness (average thickness in a natural state) of 3.0 mm was used, the clearance was adjusted to 2.0 mm, and in a case in which a urethane foam sheet having a thickness (average thickness in a natural state) of 2.0 mm was used, the clearance was adjusted to 1.0 mm.

### < Evaluation Tests >

### -Occurrence of Burrs-

It was visually observed whether or not the resin material for covering layer formation entered the contact portion between the pair of corrugation molds, thereby causing the occurrence of a burr on the outside of the covering layer in the radial direction, in production of the composite pipe. The results are shown in Table 3 below.

Yes: burr was observed.

No: burr was not observed at all.

**[Table 3]**

| Urethane foam sheet | Evaluation of burr formation |
|---|---|
| (B1) | No |
| (A1) | No |
| (B2) | No |
| (B3) | No |
| (B4) | Yes |
| (B5) | Yes |

In the Examples in which urethane foam sheets (B1) and (A1) each having a hysteresis loss within the range of 42% or more were used, burr formation was not observed.

Further, tests were carried out in the same manner as described above, using other urethane foam sheets varying in the value of the hysteresis loss. As a result, it has been confirmed that burr occurrence is observed when the value of the hysteresis loss is below 42%, as a boundary value, and that burr formation is not observed when the value of the hysteresis loss is 42% or more.

### - Occurrence of Urethane Foam Sheet Layer (Porous Urethane Layer) Being Left Behind -

In order to expose an end portion of the polybutene pipe (pipe body), the covering layer was shortened and deformed by pulling the layer 30 mm. At this time, it was visually observed whether the urethane foam sheet layer (porous urethane layer) failed to follow the movement of the covering layer so as to be left behind on the outer surface of the polybutene pipe (pipe body), or alternatively, successfully followed the movement of the covering layer to allow for easy exposure of the end portion of the polybutene pipe (pipe body). The results are shown in the following Table 4.

For the composite pipe (B4) and the composite pipe (B5), in each of which burr occurrence was observed at the radial direction outer side of the covering layer during the production of the composite pipe, the evaluation was carried out after burr removal.
A (○): No occurrence was observed.
B (Δ): Occurrence was observed, but the urethane foam sheet layer was not left behind when the covering layer was shortened while strongly gripping the covering layer.
C (×): Occurrence was observed, and the urethane foam sheet layer was left behind even when the covering layer was shortened while strongly gripping the covering layer.

**[Table 4]**

| Urethane foam sheet | Occurrence of being left behind |
|---|---|
| (B1) | C(×) |
| (B2) | B(Δ) |
| (B3) | B(Δ) |
| (B4) | A(○) |
| (B5) | A(○) |
| (A1) | A(○) |

In the Examples in which urethane foam sheets (B4), (B5) and (A1) each having a density of 22 kg/m³ or less were used, occurrence of the urethane foam sheet layer being left behind was not observed.

Further, tests were carried out in the same manner as described above, using other urethane foam sheets varying in the value of the density. As a result, it has been confirmed that the resulting urethane foam sheet layer is left behind when the value of the density is above 22 kg/m³, as a boundary value, and that the urethane foam sheet layer is prevented from being left behind when the value of the density is 22 kg/m³ or less.

The disclosure of Japanese Patent Application No. 2016-251952 is herein incorporated by reference in its entity.

All documents, patent applications, and technical standards described herein are herein incorporated by reference, as if each individual document, patent application, and technical standard were specifically and individually indicated to be incorporated by reference.

## Claims

1. A composite pipe comprising:
a pipe body having a tubular shape and comprising a resin material;
a covering layer comprising a resin material, the covering layer having a tubular shape and covering an outer circumferential surface of the pipe body, the covering layer having a bellows shape with annular ridge portions protruding outwardly in a radial direction, and annular groove portions depressed inwardly in the radial direction, the annular ridge portions and the annular groove portions being alternately formed in an axial direction of the pipe body, and the covering layer being shortenable in the axial direction of the pipe body by being guided along the outer circumferential surface of the pipe body; and
a porous urethane layer disposed between the pipe body and the covering layer, the porous urethane layer being held between the groove portions and the pipe body, and the porous urethane layer having a density of from 12 kg/m³ to 22 kg/m³ and a hysteresis loss of 42% or more.

2. The composite pipe according to claim 1, wherein the porous urethane layer is compressed and held between the groove portions and the pipe body.

3. The composite pipe according to claim 1 or 2, wherein a thickness of the porous urethane layer in a natural state is from 2 mm to 4 mm.

4. The composite pipe according to any one of claims 1 to 3, wherein the porous urethane layer has a sheet shape and contacts an entire outer circumferential surface of the pipe body.

5. The composite pipe according to any one of claims 1 to 4, wherein a length, in the axial direction, of the porous urethane layer in a natural state is from 90% to 100% of a length, in the axial direction, of the covering layer.

6. The composite pipe according to any one of claims 1 to 5, wherein a length, in the axial direction, of each of the ridge portions is greater than a length, in the axial direction, of each of the groove portions.
